# EUROPEAN PATENT APPLICATION

(11) **EP 4 644 183 A1**
(43) Date of publication of application: **05.11.2025**
(21) Application number: 24173599.2
(22) Date of filing: 30.04.2024
(51) Int. Cl.: B60Q 3/72, B60K 35/40, B60Q 3/16

(54) **METHOD AND CONTROL UNIT FOR PREVENTING BLINDNESS OF A DRIVER OF A VEHICLE**

(71) Applicant: Bayerische Motoren Werke Aktiengesellschaft, 80809 München (DE)
(72) Inventor: Otsuka, Kohei, 85774 Unterföhring (DE)

(57) **Abstract**

The present document describes a control unit for a vehicle (100), wherein the control unit is configured to predict a blinding situation of the driver of the vehicle (100), which is caused by light emitted by an upcoming object, in particular by an oncoming vehicle (210). Furthermore, the control unit is configured to adapt the illumination within the vicinity of the driver position of the vehicle (100) in preparation of the predicted blinding situation.

## Description

The present document is directed at reducing the risk of blindness of a driver caused by the headlights of an oncoming vehicle.

Driving at night can be challenging, especially on roads without lamps at the road sides. One of the main hazards is the light from the headlights of oncoming cars, which can temporarily blind and/or impair the vision of the driver of a vehicle.

The present document is directed at the technical problem of reducing the risk of blindness of the driver of a vehicle in an efficient and reliable manner. The technical problem is solved by the independent claims. Preferred examples are specified in the dependent claims.

According to an aspect, a control unit for a (motor) vehicle is described. The control unit is configured to predict a blinding situation of the driver of the vehicle, wherein the blinding situation is caused by light emitted by an upcoming object, in particular by an oncoming vehicle. The blinding situation may be predicted based on sensor data captured by one or more environment sensors (e.g. a camera, a lidar sensor and/or a radar sensor) of the vehicle, and/or based on map data for the road network that the vehicle is driving in, in conjunction with position data of a position sensor (e.g. a GNSS, notably a GPS, receiver) of the vehicle.

The control unit may be configured to predict that the blinding situation will occur at a (certain) future time instant. The future time instant may be ahead of the current time instant by a certain time interval (e.g. 1 seconds or more, or 2 seconds or more, or 5 seconds or more).

The control unit may be configured to determine that light emitted by an upcoming object, in particular by (the headlights of) an oncoming vehicle, will shine onto the driver position of the vehicle (starting) at the future time instant (notably from the future time instant onwards). This may be determined based on sensor data captured by the one or more environment sensors of the vehicle, and/or based on the map data for the road network that the vehicle is driving in, in conjunction with position data of the position sensor of the vehicle.

In particular, the control unit may be configured to detect an upcoming curve mirror on the road that the vehicle is driving on (e.g. based on the sensor data of the one or more environment sensors and/or based on the map data). It may be determined, based on the detected curve mirror, that light emitted by an upcoming object will shine onto the driver position of the vehicle at a future time instant.

Based on determining that light emitted by an upcoming object will shine onto the driver position of the vehicle, it may be predicted in a particularly reliable manner that the blinding situation will occur at the future time instant.

The control unit is further configured to adapt the illumination within the vicinity of the driver position (and at the driver position) of the vehicle in preparation of the predicted blinding situation. The illumination may be adapted prior to the future time instant (of the predicted blinding situation), in particular one second or more or two seconds or more prior to the future time instant.

The control unit may be configured to adapt the illumination within the vicinity of the driver position of the vehicle using an ambient light source and/or an interior light source of the vehicle, and/or using a display of a user interface of the vehicle.

Alternatively, or in addition, the control unit may be configured to adapt the illumination within the vicinity of the driver position of the vehicle by adapting, in particular by increasing, the level of the illumination, and/or by adapting the color of the illumination.

Hence, a control unit is described, which is configured to adapt the illumination within the vicinity of the driver in preparation of an upcoming blinding situation, thereby preparing the eyes of the driver to the upcoming blinding situation and thereby reducing the blinding effect of the upcoming blinding situation. As a consequence, the driving comfort and the driving safety of the vehicle may be increased.

The control unit may be configured to determine, in particular based on sensor data of a light sensor of the vehicle, the current situation (at the current time instant), in particular the current level, of the illumination within the vicinity of the driver position of the vehicle. Furthermore, the control unit may be configured to predict that the blinding situation will occur at a future time instant, in dependence of the current situation of the illumination. In particular, the control unit may be configured to predict that the blinding situation will occur at a future time instant, if, in particular only if, the current level of the illumination within the vicinity of the driver position of the vehicle is equal to or lower than a pre-determined illumination threshold.

Hence, it may be verified whether the eyes of the driver are currently used to a relatively low illumination level (such that the predicted blinding situation would cause a significant blindness) or whether the eyes of the driver are already used to a relatively high illumination level (such that the predicted blinding situation will most likely not cause a significant blindness). By doing this, the comfort and security of the vehicle may be further increased.

The control unit may be configured to determine the remaining time interval until the predicted blinding situation will occur (i.e. the time interval between the current time instant and the future time instant). Furthermore, the control unit may be configured to adapt the illumination within the vicinity of the driver position of the vehicle in dependence of the remaining time interval. In particular, the control unit may adapt the illumination, if (possibly only if) the remaining time interval is equal to or greater than a predetermined time threshold (which is sufficiently long to allow the eyes of the driver to adapt to the modified illumination). On the other hand, the control unit may not adapt the illumination (and may maintain the illumination as is), if the remaining time interval is smaller than the predetermined time threshold (because there is not enough time for the eyes of the driver to adapt to the modified illumination). By doing this, the comfort and safety of the vehicle may be further increased.

The control unit may be configured to change a setting (i.e. at least one setting) of a light source of the vehicle from a basic setting to a modified setting, in order to adapt the illumination within the vicinity of the driver position of the vehicle in preparation of the predicted blinding situation.

Furthermore, the control unit may be configured to determine (subsequently) that the predicted blinding situation has passed. In reaction to determining that the predicted blinding situation has passed, the setting of the light source may be changed back to the basic setting, thereby further increasing the comfort and the safety of the vehicle.

According to another aspect, a vehicle, notably a road vehicle (such as a car or a truck or a bus), is described, which comprises the control unit that is outlined in the present document.

According to a further aspect, a method for reducing the impact of a blinding situation on the driver of a (motor) vehicle is described. The method comprises predicting a blinding situation of the driver of the vehicle, which is caused by light emitted by an upcoming object, in particular by an oncoming vehicle. Furthermore, the method comprises adapting the illumination within the vicinity of the driver position and/or the illumination at the driver position of the vehicle in preparation of the predicted blinding situation.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
Fig. 1 shows example components of a vehicle;
Fig. 2 illustrates a driving situation with an oncoming vehicle having the headlights turned on; and
Fig. 3 shows a flow chart of an example method for preventing blindness of the driver of a vehicle.

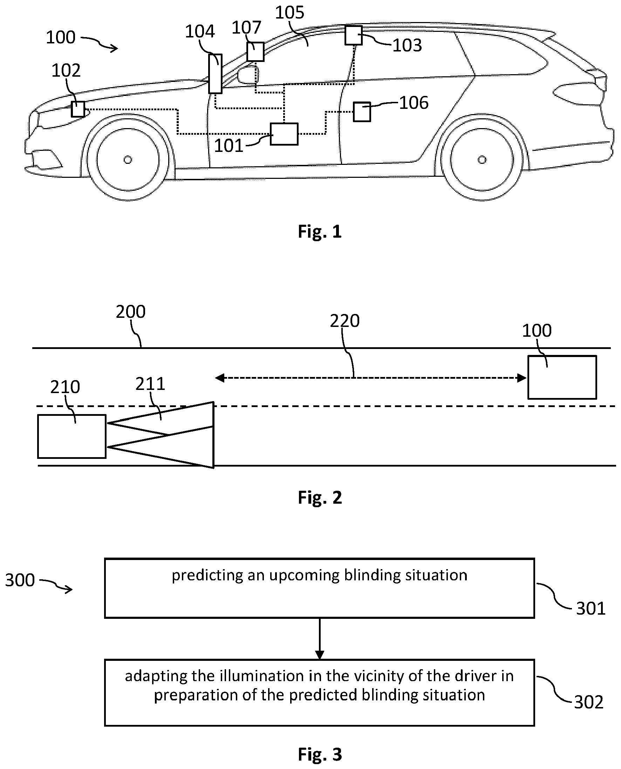

As indicated above, the present document is directed at preventing or at least reducing blindness of the driver of a vehicle in an efficient and reliable manner. In this context Fig. 1 shows a vehicle 100 having a passenger cabin 105. The cabin 105 of the vehicle 100 has one or more illumination elements (i.e. light sources) 103, 104 which are each configured to illuminate the cabin 105 of the vehicle 100. Example illumination elements (i.e. light sources) 103, 104 are
- an ambient light source 103;
- a display 104 of a user interface of the vehicle 100; and/or
- a reading lamp.

The vehicle 100 comprises one or more environment sensors 102 which are each configured to provide sensor data regarding the environment of the vehicle 102. Example environment sensors 102 are a camera, a lidar sensor, a radar sensor, an ultrasonic sensor, etc. A control unit 101 of the vehicle 100 is configured to detect an object (notably another vehicle) within the environment, notably within the front side environment at the front of the vehicle 100, based on the sensor data of the one or more environment sensors 102.

Furthermore, the vehicle 100 may comprise a position sensor 106, notably a GNSS (global navigation satellite system) receiver, which is configured to capture sensor data (e.g., coordinates) regarding the position of the vehicle 100. The control unit 101 may be configured to analyze the sensor data of the position sensor 106 in conjunction with a digital map (i.e. map data) of the road network that the vehicle is driving in, in order to determine the position of the vehicle 100 within the road network.

The vehicle 100 may further comprise a light sensor 107 which is configured to capture sensor data regarding the light condition (i.e. the illumination) within the vicinity of the driver position of the vehicle 100. The control unit 101 may be configured to determine the illumination level in the direct vicinity of the driver position based on the sensor data of the light sensor 107. In particular, it may be determined whether or not the vehicle 100 is driving at night within an area without road lamps.

Fig. 2 shows an example driving situation with an oncoming vehicle 210 approaching the vehicle 100 on a road 200. The oncoming vehicle 210 has its headlights 211 turned on. This may lead to a blinding situation of the driver of the vehicle 100, notably once the distance 220 between the vehicle 100 and the oncoming vehicle 210 is equal to or smaller than a pre-determined distance threshold.

A blinding situation of the driver of the vehicle 100 may notably occur, when the vicinity of the driver position of the vehicle 100 is poorly illuminated (e.g. because the road 200 that the vehicle 100 is driving on does not have any road lamps), such that the eyes of the driver are adapted to (possibly complete) darkness. On the other hand, a blinding situation of the driver may not occur, when the vicinity of the driver position of the vehicle 100 is sufficiently illuminated, such that the eyes of the driver are adapted to a certain level of illumination.

The control unit 101 of the vehicle 100 may be configured to predict an upcoming blinding situation. In particular, it may be predicted, that
- at an upcoming (future) time instant, the light of the headlights 211 of another vehicle 210 will fall into the gaze of the driver of the vehicle 100 (first condition); and
- currently the eyes of the driver are adapted to an illumination level that is below a pre-determined illumination threshold (second condition).

The first condition may be predicted based on the sensor data of the one or more environment sensors 102 and/or based on the sensor data of the position sensor 106 (in conjunction with the digital map of the road network). The second condition may be predicted based on the sensor data of the light sensor 107.

If an upcoming blinding situation is predicted, the control unit 101 may increase the illumination level within the vicinity of the driver position of the vehicle 100, in order to allow the eyes of the driver to adapt to an increased illumination level, in particular to an illumination level which is higher than the pre-determined illumination threshold. In this context, the control unit 101 may control the one or more illumination elements (i.e. light sources) 103, 104 of the vehicle 100 to increase the illumination level within the cabin 105 of the vehicle 100. By way of example, the ambient light source 103 may be turned on or may be controlled to increase the intensity of the ambient light within the cabin 105. Alternatively, or in addition, the display 104 of the user interface may be turned on or may be controlled to increase the intensity of the emitted light.

By doing this, it may be ensured that at the predicted upcoming (future) time instant, the eyes of the driver are adapted to a sufficiently high illumination level, thereby preventing or at least reducing the blindness caused by the light of the head lights 211 of the other vehicle 210.

Hence, a method is described, which is directed at the reduction of visual discomfort caused by the headlights 211 of an oncoming vehicle 210 at night, especially on roads 200 without street lamps and/or with relatively sharp curves. The method uses a combination of sensors 102, 106, map data and/or lighting elements (i.e. light sources) 103, 104 to adapt the interior light of the vehicle 100 to the external light conditions, thereby preventing the driver's eyes from being blinded by sudden changes in brightness. In particular, the blinding effect of the headlights 211 of an oncoming vehicle 210 on the driver's eyes at night may be reduced or prevented.

One or more radar, lidar and/or camera sensors 102 may be used to detect the presence, the distance 220 and/or the direction of an oncoming vehicle 100 from far away, before the light from the headlight 211 of the oncoming vehicle 100 reaches the driver's eyes.

The ambient light and/or the interior light 103 may be used to adjust the brightness inside the vehicle 100 (according to the sensor data of the one or more environment sensors 102), so that the driver's eyes can adapt to the upcoming changing light conditions, thereby avoiding the driver from being blinded by the sudden increase in brightness (caused by the headlights 211).

GPS sensor data and map data may be used to determine whether the vehicle 100 is approaching a corner with a dead angle, where the headlights 211 of an oncoming vehicle 210 may not be visible until the headlights 211 are very close. In such a case, the interior light within the cabin 105 may be increased preemptively to prepare the driver's eyes for the possible glare.

The control unit 101 may be configured to detect a curve mirror (e.g. based on the sensor data of the one or more environment sensors 102 and/or based on the map data). The light from the headlights 211 of another vehicle 210 may be reflected by the curve mirror towards the driver of the vehicle 100. Hence, a curve mirror may be taken into consideration when detecting an upcoming blinding situation.

A system (comprising a control unit 101) is described that comprises a sensor module, a light control module, and/or a display module. The sensor module includes one or more sensors 102, such as radar, lidar, camera, or other type of sensor, that can detect the presence and distance of an oncoming object 210, such as a vehicle, on the road 200 ahead. The light control module includes one or more light sources 103, such as ambient light, interior light, or other types of light sources, that can adjust the brightness and/or color of the light inside the vehicle 100 according to and/or in dependence of the sensor data of the sensor module. The display module includes one or more displays 105, such as a dashboard, a head-up display, a windshield, or other type of display, that can affect overall brightness in the vehicle 100 and that can show relevant information to the driver of the vehicle 100, such as the distance and/or speed of an oncoming object 210, the current brightness level inside the vehicle 100, and/or other type of information.

The system may operate as follows: When the sensor module detects an oncoming object 210 directly or via detecting a curve mirror that may reflect the light from the headlight 211 of an oncoming object 210, the light control module may increase the brightness and/or may change the color of the ambient light and/or of the interior light inside the vehicle 100 gradually, in order to help the driver's eyes to adapt to the expected increase in brightness from the headlight 211 of the oncoming object 210.

When the sensor module detects an oncoming object 210 that is already relatively close to the vehicle 100 and already within the line of sight of the driver of the vehicle 100, the light control module may maintain or decrease the brightness and/or may change the color of the ambient light and/or the interior light inside the vehicle 100.

When the sensor module detects no oncoming object 210 within a pre-determined range, the light control module may restore or decrease the brightness and/or may change the color of the ambient light and/or the interior light inside the vehicle 100 to a normal or comfortable level for night driving.

The system may use GPS and map data to determine whether the vehicle 100 is approaching a corner with a dead angle. If so, the light control module may adjust the brightness and/or the color of the ambient light and/or the interior light inside the vehicle 100 preventively, in order to help the driver's eyes to adapt to the potential increase in brightness from the (reflected) headlight 211 of a possible oncoming object 210.

Fig. 3 shows a flow chart of an example (computer-implemented) method 300 for reducing the impact of a blinding situation on the driver of a vehicle 100. The method 300 may be executed by a control unit 101 of the vehicle 100.

The method 300 comprises predicting 301 a blinding situation of the driver of the vehicle 100, which is caused by light emitted by an upcoming object 210, in particular by an oncoming vehicle. A blinding situation may be predicted, if (e.g. only if) the conditions are met:
- a first condition that light emitted by an upcoming object 210 will shine onto the driver position of the vehicle 100 (at a future time instant); and/or
- a second condition that the level of the illumination within the vicinity of the driver position is currently equal to or lower than a pre-determined illumination level.

The method 300 further comprises adapting 302 the illumination (notably increasing the level of the illumination) within the vicinity of the driver position of the vehicle 100 in preparation of the predicted blinding situation. By doing this, the impact of the blinding situation on the driver may be reduced, thereby increasing the comfort and the security of the vehicle 100.

It should be noted that the description and drawings merely illustrate the principles of the proposed methods and systems. Those skilled in the art will be able to implement various arrangements that, although not explicitly described or shown herein, exemplify the principles of the invention and are included within its scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A control unit (101) for a vehicle (100), wherein the control unit (101) is configured to:
determine that light emitted by an oncoming vehicle (210) will shine onto the driver position of the vehicle (100) at a future time instant based on at least one of sensor data captured by one or more environment sensors (102) of the vehicle (100) and map data for a road network that the vehicle (100) is driving in, in conjunction with position data of a position sensor (106) of the vehicle (100);
based on the determination that the light emitted by the oncoming vehicle (210) will shine onto the driver position of the vehicle (100), predict a blinding situation of a driver of the vehicle (100), which is caused by the light emitted by the oncoming vehicle (210); and
adapt an illumination within a vicinity of a driver position of the vehicle (100) in preparation of the predicted blinding situation.

2. The control unit (101) of claim 1, wherein the control unit (101) is further configured to adapt the illumination prior to the future time instant.

3. The control unit (101) of claim 2, wherein the control unit (101) is further configured to adapt the illumination one second or more prior to the future time instant.

4. The control unit (101) of any one of the previous claims, wherein the control unit (101) is further configured to:
determine, based on sensor data of a light sensor (107), a current level of the illumination within the vicinity of the driver position of the vehicle (100); and
predict that the blinding situation will occur at the future time instant depending on the current level of the illumination.

5. The control unit (101) of claim 4, wherein the control unit (101) is further configured to predict that the blinding situation will occur at the future time instant if the current level of the illumination within the vicinity of the driver position of the vehicle (100) is equal to or lower than a pre-determined illumination threshold.

6. The control unit (101) of any one of the preceding claims, wherein the control unit (101) is further configured to:
detect an upcoming curve mirror on a road (200) that the vehicle (100) is driving on; and
determine, based on the detected curve mirror, that light emitted by the oncoming vehicle (210) will shine onto the driver position of the vehicle (100) at a future time instant.

7. The control unit (101) of any one of the previous claims, wherein the control unit (101) is further configured to adapt the illumination within the vicinity of the driver position of the vehicle (100) using
an ambient light source and/or an interior light source (103) of the vehicle (100); and/or
a display (104) of a user interface of the vehicle (100).

8. The control unit (101) of any one of the previous claims, wherein the control unit (101) is further configured to adapt the illumination within the vicinity of the driver position of the vehicle (100) by
increasing a level of the illumination; and/or
adapting a color of the illumination.

9. The control unit (101) of any one of the previous claims, wherein the control unit (101) is further configured to:
determine a remaining time interval until the predicted blinding situation will occur; and
adapt the illumination within the vicinity of the driver position of the vehicle (100) depending on the remaining time interval,
wherein the illumination is adapted if the remaining time interval is equal to or greater than a predetermined time threshold; and
wherein the illumination is not adapted if the remaining time interval is smaller than the predetermined time threshold.

10. The control unit (101) of any one of previous claims, wherein the control unit (101) is further configured to:
change a setting of a light source (103, 104) of the vehicle (100) from a basic setting to a modified setting in order to adapt the illumination within the vicinity of the driver position of the vehicle (100) in preparation of the predicted blinding situation;
determine that the predicted blinding situation has passed; and
in reaction to determining that the predicted blinding situation has passed, change the setting of the light source (103, 104) back to the basic setting.

11. A method (300) for reducing an impact of a blinding situation on a driver of a vehicle (100), the method (300) comprising:
determining that light emitted by an oncoming vehicle (210) will shine onto the driver position of the vehicle (100) at a future time instant based on at least one of sensor data captured by one or more environment sensors (102) of the vehicle (100) and map data for a road network that the vehicle (100) is driving in, in conjunction with position data of a position sensor (106) of the vehicle (100);
based on the determination that the light emitted by the oncoming vehicle (210) will shine onto the driver position of the vehicle (100), predicting (301) a blinding situation of the driver of the vehicle (100), which is caused by the light emitted by the oncoming vehicle (210); and
adapting (302) an illumination within a vicinity of a driver position of the vehicle (100) in preparation of the predicted blinding situation.
